Europäisches Patentamt

European Patent Office

Office européen des brevets

(19)

(11) Veröffentlichungsnummer: **0 296 299**
**A1**

(12) **EUROPÄISCHE PATENTANMELDUNG**

(21) Anmeldenummer: **87810360.5**

(22) Anmeldetag: **24.06.87**

(51) Int. Cl.⁴: **B23K 7/04**

(43) Veröffentlichungstag der Anmeldung:
**28.12.88 Patentblatt 88/52**

(84) Benannte Vertragsstaaten:
**AT BE CH DE ES FR GB GR IT LI LU NL SE**

(71) Anmelder: **Peter, Ulrich**
**Weinhalde**
**CH-3054 Schüpfen(CH)**

(72) Erfinder: **Peter, Ulrich**
**Weinhalde**
**CH-3054 Schüpfen(CH)**

(74) Vertreter: **Seehof, Michel et al**
**c/o AMMANN INGENIEURS-CONSEILS EN**
**PROPRIETE INTELLECTUELLE SA BERNE**
**Schwarztorstrasse 31**
**CH-3001 Berne(CH)**

(54) **Vorrichtung zum Trennen eines Rohres.**

(57) Die Vorrichtung zum Trennen eines Rohres enthält eine drehbare Aufspannvorrichtung (2) für das zu trennende Rohr (1) und einen mit der Aufspannvorrichtung verbundenen, drehbaren und auf den Aussendurchmesser des Rohres einstellbaren Stift (9), zum Wirken auf eine auf den gewünschten Gehrungswinkel (g) einstellbare und vom Stift betätigbare Führungsplatte (11), die mit der Trenneinrichtung (16) verbunden ist, um das Trennmittel (22) der Trenneinrichtung im gewünschten Gehrungswinkel auf das sich drehende Rohr zu richten.

Falls ein Plasmaschneidgerät zum Trennen von Stahl- oder Chromstahlrohren unter einem beliebigen Gehrungswinkel verwendet wird, kann gegenüber herkömmlichen Vorrichtungen eine erhebliche Zeitersparnis erzielt werden.

## Vorrichtung zum Trennen eines Rohres

Die vorliegende Erfindung bezieht sich auf eine Vorrichtung zum Trennen eines Rohres, mit einer insbesondere mittels Energiezufuhr arbeitenden Trenneinrichtung, wobei insbesondere auch an ein Durchtrennen eines Kaminzuleitungsrohres aus Chromstahl mittels eines Plasmaschneidgerätes gedacht ist.

Im allgemeinen werden Stahl- oder Chromstahlrohre, wie sie beispielsweise im Kaminbau verwendet werden in eine Werkstatt oder vor Ort unter einem bestimmten Gehrungswinkel getrennt, wobei häufig mechanische Geräte wie Trennsägen verwendet werden oder Plasmaschneidgeräte. Die bisher bekannten Geräte sind entweder sehr zeitaufwendig oder relativ ungenau oder kompliziert und teuer.

Es ist davon ausgehend Aufgabe der vorliegenden Erfindung, eine Vorrichtung zum Trennen von Rohren anzugeben die es gestattet, auch Stahl- und Chromstahlrohre innert sehr kurzer Zeit unter einem beliebigen Gehrungswinkel zu trennen. Eine Vorrichtung die diese Aufgabe löst, ist in den Ansprüchen beschrieben.

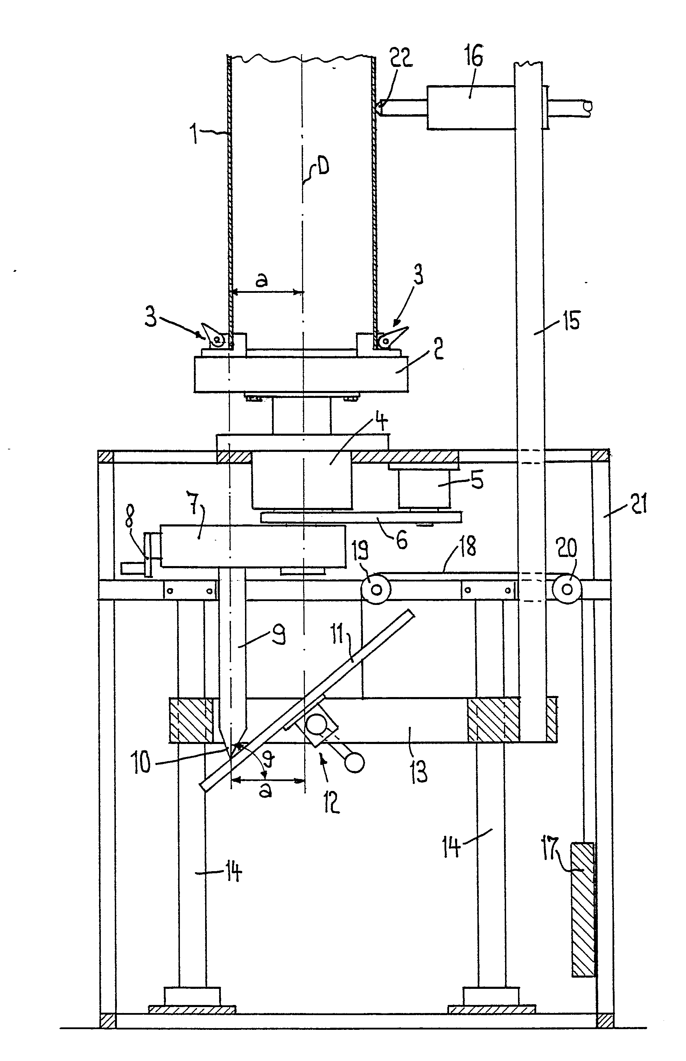

Die Erfindung wird im folgenden anhand einer einzigen Figur, die im Schnitt und schematisch den Aufbau einer solchen Vorrichtung zeigt, näher erläutert.

Das zu trennende Rohr 1 ist auf einer drehbaren Aufspannvorrichtung 2 mittels den Klemmbacken 3 zentrisch gespannt und festgeklemmt. Die Aufspannvorrichtung ist auf einem Drehlager 4 gelagert und wird über einen Drehantrieb 5 und Transmissionsmitteln 6 angetrieben. Dabei kann dieser Antrieb manuell über eine Handkurbel erfolgen oder über einen drehzahlgeregelten Elektromotor. Mit dem Drehlager und damit mit der drehbaren Aufspannvorrichtung ist eine Verstelleinheit 7, die in vorliegendem Ausführungsbeispiel über eine Handkurbel 8 verstellbar ist, verbunden. Diese Verstelleinheit 7 könnte auch elektrisch, respektive elektronisch betätigbar sein. Mittels der Verstelleinheit 7 kann ein daran befestigter, nach unten weisender Führungsstift 9 derart eingestellt werden, dass der Abstand a von der Rohrmittelachse D bis zur Spitze 10 des Stiftes genau dem halben Rohraussendurchmesser entspricht. Die Spitze 10 des Führungsstiftes 9 wirkt auf eine Führungsplatte 11, die über eine Einstelleinrichtung 12 mit Winkelskala auf den gewünschten Schneid- oder Gehrungswinkel g eingestellt werden kann. Die Führungsplatte mit der Einstelleinrichtung ist an einem Tisch 13 befestigt, der an Säulen 14 geführt ist und über einen nach oben weisenden Träger 15 mit einem daran höhenverstellbaren Plasmaschneidgerät 16 verbunden ist.

Damit die Führungsplatte und der über den Tisch und Träger damit verbundene Plasmaschneider die Bewegungen des Führungsstiftes folgen kann ist es notwendig, dass auf den Tisch eine nach oben gerichtete Kraft wirkt. Gemäss vorliegendem Ausführungsbeispiel kann die Gegenkraft durch ein Gegengewicht 17 erzeugt werden, das über ein Seil 18 und zwei Umlenkrollen 19 und 20 auf den Tisch wirkt. Statt eines Gegengewichtes können auch mehrere verwendet werden. Die drehbare Aufspannvorrichtung mit dem Antrieb, der Verstelleinheit sowie dem Führungsstift sind in einem Gestell 21 angeordnet.

Der Arbeitsablauf mit einer vorgängig beschriebenen Vorrichtung ist etwa der folgende:

Das zu trennende Rohr 1 wird auf die drehbare Aufspannvorrichtung 2 gestellt und mittels der Klemmbacken 3 zentrisch gespannt und festgeklemmt. Dann wird der Führungsstift 9, respektive dessen Spitze 10 mittels der Handkurbel 8 genau auf den Aussendurchmesser des Rohres eingestellt und daraufhin der gewünschte Schneidwinkel der Führungsplatte gewählt. Anschliessend wird der Plasmaschneidkopf 16, respektive die Spitze 22 der Brenndüse auf die gewünschte Höhe eingestellt und die Brenndüse am Material angelegt. Jetzt wird der Plasmaschneider eingeschaltet und die drehbare Aufspannvorrichtung mittels des Antriebes 5 um die Drehachse D, die gleichzeitig die Mittelachse des Rohres ist, gedreht. Der Führungsstift, das heisst dessen Spitze, bewegt die Führungsplatte und damit den Tisch 13 auf- und abwärts. Dadurch entsteht auf der Führungsplatte diejenige Ellipse, die auch am Rohr entsteht.

Die erfindungsgemässe Vorrichtung wurde in erster Linie für Stahl- und Chromstahlrohre konzipiert, doch können selbstverständlich auch andere Rohre, beispielsweise Aluminium- oder Keramik- sowie Glas-, Quarzglas- oder Kunststoffrohre damit unter einem beliebig einstellbaren Winkel getrennt werden. Statt eines Plasmaschneidgerätes kann auch ein Laserschneid- oder ein Wasserstrahlgerät verwendet werden oder aber, zum Ritzen eines Glasrohres, eine Diamantspitze.

Die Ausführung der erfindungsgemässen Trennvorrichtung beschränkt sich nicht auf die dargestellte, vertikale Ausführungsweise. Es ist auch möglich, dieses Gerät mit einer horizontal verlaufenden Drehachse, respektive Mittellinie des Rohres zu betreiben.

Anstatt eines Ausgleichgewichtes 17 können auch Druckfedern verwendet werden, die um die Säulen 14 angeordnet sind und den Tisch nach oben drücken.

## Ansprüche

1. Vorrichtung zum Trennen eines Rohres, mit einer insbesondere mittels Energiezufuhr arbeitenden Trenneinrichtung, gekennzeichnet durch eine drehbare Aufspannvorrichtung (2) für das zu trennende Rohr (1) und einen mit der Aufspannvorrichtung verbundenen, drehbaren und auf den Aussendurchmesser des Rohres einstellbaren Stift (9), zum Wirken auf eine auf den gewünschten Gehrungswinkel (g) einstellbare und vom Stift betätigbare Führungsplatte (11), die mit der Trenneinrichtung (16) verbunden ist, um das Trennmittel (22) der Trenneinrichtung zur Erzielung des gewünschten Gehrungswinkels auf das sich drehende Rohr zu richten.

2. Vorrichtung nach Anspruch 1, dadurch gekennzeichnet, dass die drehbare Aufspannvorrichtung (2) über Transmissionsmittel (6) mit einem Elektro-Motor (5) und der Führungsstift (9) mit einer Verstelleinheit (7) verbunden ist.

3. Vorrichtung nach Anspruch 1 oder 2, dadurch gekennzeichnet, dass die Führungsplatte (11) in einem Tisch (13) angeordnet ist, der an Säulen (14) geführt und über einen daran angeordneten Ständer (15) mit der am Träger verstellbar befestigten Trenneinrichtung (16) verbunden ist.

4. Vorrichtung nach Anspruch 3, dadurch gekennzeichnet, dass der Tisch (13) mit Mitteln (17) beaufschlagt ist, um ihn gegen den Führungsstift (9) zu drücken.

5. Vorrichtung nach Anspruch 4, dadurch gekennzeichnet, dass diese Mittel ein Gegengewicht (17) enthalten.

6. Vorrichtung nach einem der Ansprüche 1 bis 5, dadurch gekennzeichnet, dass die drehbare Aufspannvorrichtung (2) mit dem Elektromotor (5) und der Führungsstift (9) an der Verstelleinheit (7) sowie die Führungssäulen (14) in einem Gestell (21) angeordnet sind.

7. Verwendung der Vorrichtung nach einem der Ansprüche 1 bis 6, dadurch gekennzeichnet, dass ein mittels Wärmeenergiezufuhr arbeitendes Schneidgerät (16) auf ein Metall-Rohr (1) wirkt.

8. Verwendung nach Anspruch 7, dadurch gekennzeichnet, dass ein Plasma-Schneidgerät verwendet wird, um Stahl-oder Chromstahlrohre für Kaminanlagen unter einem beliebigen Gehrungswinkel zu trennen.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-U-1 714 268 (KLÖNNE) <br> * gesamtes Dokument * | 1 | B 23 K 7/04 |
| A | | 2,3,6,7 | |
| Y | CH-A- 353 240 (LINK) <br> * Seite 2, Zeilen 35-95; Figur 2 * | 1 | |
| A | DD-A- 54 557 (LABAHN) <br> * gesamtes Dokument * | 1,2,6,7 | |
| A | US-A-2 384 128 (NATION) <br> * Anspruch 1; Figur 1 * | 1 | |
| A | DE-C- 849 070 (STEINMÜLLER) <br> * Anspruch 1; Figur 1 * | 1 | |
| A | US-A-2 545 666 (LONNGREN) <br> * Anspruch 1; Spalte 4, Zeilen 40-45; Figur 1 * | 4 | |
| A | PATENT ABSTRACTS OF JAPAN, Band 2, Nr. 136, 11. November 1978, Seite 2900 C 78; & JP - A - 53 100 949 (SUMITOMO KINZOKU KOGYO) 09.02.1978 | | |

RECHERCHIERTE SACHGEBIETE (Int. Cl.4)

B 23 D 21/00
B 23 K 7/00
B 23 K 9/00
B 23 Q 35/00

Der vorliegende Recherchenbericht wurde für alle Patentansprüche erstellt

| Recherchenort | Abschlußdatum der Recherche | Prüfer |
|---|---|---|
| BERLIN | 02-02-1988 | MARTIN A E W |

EPO FORM 1503 03.82 (P0403)